# EUROPEAN PATENT SPECIFICATION

(11) **EP 0 587 994 B1**
(45) Date of publication and mention of the grant of the patent: **02.10.1996**
(21) Application number: 93108592.2
(22) Date of filing: 27.05.1993
(51) Int. Cl.: B60R 1/06

(54) **Electrically powered foldable outer rearview mirror for motor vehicles**
Elektrisch klappbarer Aussen-Rückblickspiegel für ein Kraftfahrzeug
Rétroviseur extérieur repliable électriquement pour véhicules automobiles

(30) Priority: 16.09.1992 JP 70387/92
(43) Date of publication of application: 23.03.1994
(73) Proprietor: MURAKAMI KAIMEIDO CO., LTD, Shizuoka 422 (JP)
(72) Inventor: Mochizuki, Toshihiro, Fujieda-shi, Shizuoka-ken 426 (JP)
(74) Representative: Riederer Freiherr von Paar zu Schönau, Anton

(56) References cited:
- EP-A- 0 333 901
- JP-A- 3 016 841
- JP-U- 3 069 552
- US-A- 4 893 916
- US-A- 4 981 349

## Description

### BACKGROUND OF THE INVENTION

### 1. Field of the Invention

This invention relates to electrically powered foldable outer rearview mirrors, usable for motor vehicles, of the type disclosed in the document EP-A-0 333 901.

### 2. Description of the Prior Art

An electrically powered foldable outer rearview mirror for a motor vehicle comprises a mirror body rotatably supported on a shaft which is mounted on a base, an electric driving means and a speed reduction gear mechanism respectively mounted on a frame of the mirror body, further comprises a clutch gear mounted on the periphery of the shaft so as to be fixed to said shaft when the mirror is being folded by electric power, and to be free from the shaft when the mirror is enforcedly rotated (EP-A-333 901).

The erected state and the folded state of the mirror body can be held by engaging concave portions formed on a shaft base portion with steel balls which are intermediately arranged on the frame root portion or on the under surface of the clutch gear. For such rearview mirrors as described hereinbefore and disclosed by Japanese Published Patent No. Hei 3-16841, several steel balls are supported on a frame (or a bracket) root portion in the mirror body, while the first and the second concave portions are formed on the shaft base portion relative to the mirror erected and folded positions said steel balls are engaged with said first and second concave portions at the mirror erected and folded positions and when the mirror body is rotated, each steel ball is rotatingly moved on a sliding surface of said shaft base portion running over said concave portion. Further in a system disclosed by Japanese Utility Model Registration Application Laid Open under No. Hei 3-69552, the clutch gear is provided between the frame root portion and the shaft base portion and several steel balls are intermediately arranged between the upper surface of the clutch gear and the frame root portion and between the lower surface of the clutch gear and the shaft base portion, respectively.

In the conventional system for automatically folding the outer rearview mirror, however, a chattering occurs on the mirror surface, which is caused by a vertical movement of the mirror body at the time of the rotation. The following reasons and further disadvantages are to be indicated:
1. The clutch gear or a stopper plate is intermediately arranged between the shaft and the frame and the location of the mirror position and the shock avoidance are practiced by the steel balls, thereby the system does not have good stability and the chattering is easily caused by an uncertain accuracy of the ball engaging parts. Therefore there is also some fear of chattering of the mirror surface during the vehicle is running.
2. The clutch gear or the stopper plate is intermediately provided between the shaft an the frame, thereby the system does not have good water proof ability and dust proof ability.
3. The frame moves vertically when the mirror is electrically rotated to erect and fold and is enforcedly rotated.
4. In the system disclosed by Japanese Patent Application Laid Opened No. Hei 3-16841, both clutches are simulataneously released at the time of the mirror being enforcedly rotated, thereby the gear teeth are subjected to much burden.

### SUMMARY OF THE INVENTION

It is an object of the present invention to provide an electrically powered foldable outer rearview mirror for motor vehicles in which the frame is prevented from vertically moving in the electric rotation of the mirror to erect or fold or in the enforced rotation of the mirror to relieve the burden on the gear teeth.

According to the present invention as defined in claim 1, in the electrically powered foldable outer rearview mirror in which the contact of an under surface of a frame root portion with a shaft base portion is constructed to a surface contact, a speed reduction gear mechanism is connected to an electric driving means, a clutch gear is engaged with the final stage gear of said speed reduction gear mechanism and is penetrated through the shaft, said clutch gear is disposed on the upper suface of a frame root portion and on the one surface of which a shock avoidance clutch is formed and on the other surface of which a location clutch for the mirror body erected position is formed, and thus the frame is prevented from vertically moving when the mirror is electrically rotated to erect and fold and when the mirror is enforcedly rotated. The clutch gear is mounted not between the frame root portion and the shaft base portion but on the upper surface of the frame root portion and is preferably contained in a frame wall surface.

The shock avoidance clutch preferably comprises a plurality of ball retainer concave recesses formed along a circle of equal radius, i.e. on the same circumference, of the upper surface of the clutch gear, a ball guide disposed above the upper portion of the clutch gear and formed with a plurality of translucent holes or through-holes on the same radius or circumference of said clutch gear, a plurality of steel balls engaged in respective ones of said ball retainer concave recesses and the through-holes and rotated to move on the upper surface of the clutch gear running over said ball retainer concave recesses when the mirror body is enforcedly rotated.

Further the location clutch for the erected mirror body position preferably comprises a plurality of teeth formed along the circumference direction of the under surface of the clutch gear, a plurality of ball holding concave recesses formed on the upper surface of the frame root portion and a plurality of steel balls intermediately mounted between said teeth and said ball holding concave recesses.

A motor is driven when the mirror is electrically rotated and the final gear of the speed reduction gear mechanism engaged with the clutch gear revolves around the shaft. During the final gear being revolving, since the balls rotated to move on the upper surface of the clutch gear are engaged in the ball retaining concave recesses and the shock avoidance clutch is left engaged, the mirror body is electrically driven to rotate toward erecting or folding direction. The mirror body is erected by being rotated to the erected state from the folded state and the electric driving means is locked by an operation of the location clutch and the rotation of the mirror body is stopped to keep the erected state.

When the mirror body is enforcedly rotated, the contact of the clutch gear with the final stage gear of the speed reduction mechanism is not released and they tend to unitedly rotate with the mirror body. The location clutch fixing the position where the mirror body is erected is composed of the frame root portion and the under surface of the clutch gear, and is not to be released whatever position the frame is located, therefore in case of the mirror body being enforcedly rotated, only the shock avoidance clutch which is mounted on the upper surface of the clutch gear is released. In releasing the lock of the shock avoidance clutch, the steel balls are rotated to move on the upper surface of the clutch gear after running out from the ball retainer concave recesses on the clutch gear upper surface they were in before and slide up in the through-holes formed in the ball guide, and the shock avoidance clutch is released.

After the mirror body has been enforcedly rotated and is electrically moved again, since the shock avoidance clutch has been already released, the clutch gear idle runs to lead the steel balls to run over the teeth of the gear under surface from the precedence thereof and simutaneously the steel balls fall down in the ball retainer concave recesses, and then the mirror body starts to be folded.

The above objects, features and advantages of the present invention will become apparent from the following description and the appended claims taken in conjunction with the accompanying drawings which show by way of example preferred embodiments of the present invention and in which like component parts are designated by like reference numerals throughout the various figures.

### BRIEF DESCRIPTION OF THE DRAWINGS

In the accompanying drawings;
Fig. 1 is a longitudinal sectional view of an outer rearview mirror embodied in accordance with the invention;
Fig. 2 is a sectional plan view taken along the transverse line A - A of Fig. 1;
Fig. 3 is a sectional plan view taken along the transverse line B - B of Fig. 1;

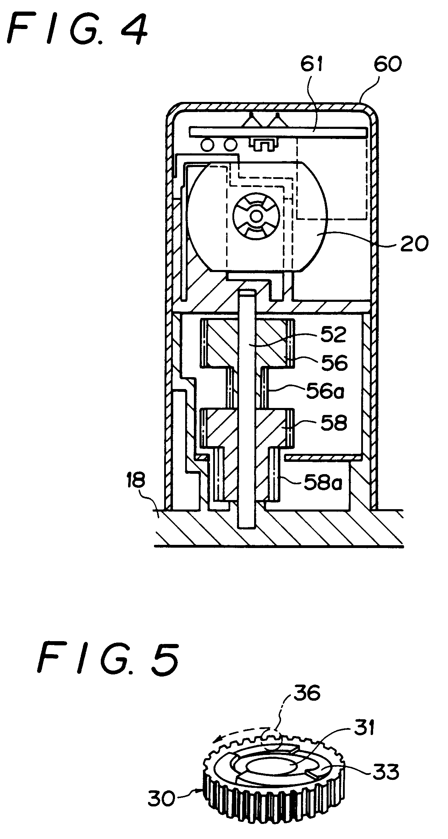

Fig. 4 is a sectional view taken along the longitudinal line C - C of Fig. 1;
Fig. 5 is a rear side view of a clutch gear embodied in accordance with the invention;
Fig. 6 is an enlarged longitudinal sectional view of substantial parts of Fig. 1;
Fi. 7 is an enlarged longitudinal sectional view of a mirror body embodied in accordance with the invention which is ready for being rotated to be folded; and
Fig. 8 is an exploded view of assembled parts around a shaft including a speed reduction gear mechanism of Fig. 1.

### DETAILED DESCRIPTION OF THE PREFERRED EMBODIMENTS

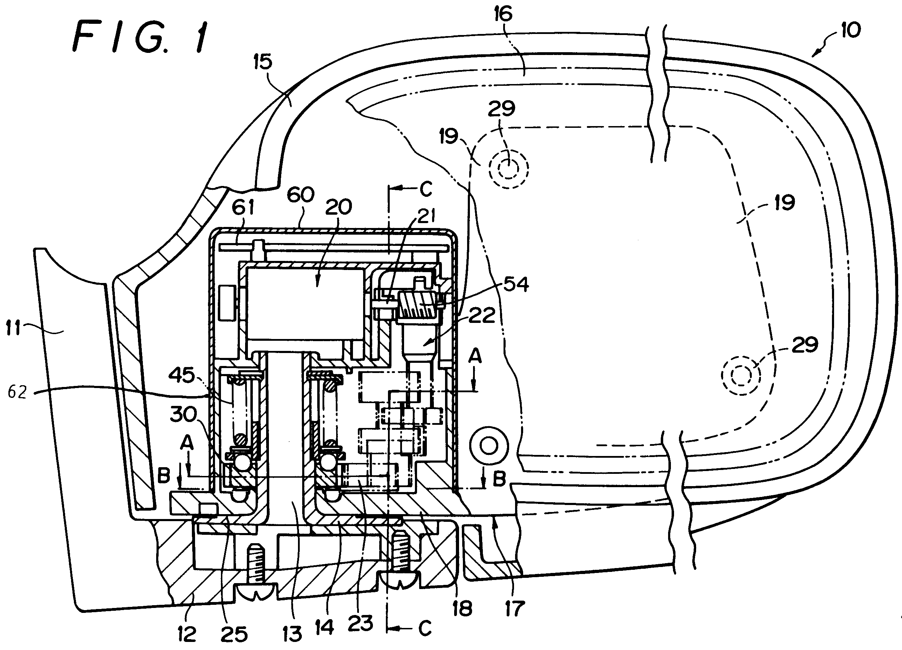

Referring first to Fig. 1, there is shown an electrically powered foldable outer rearview mirror assembly 10 suitable to be associated with a motor vehicle.

A base 11 comprises an expanded part 12 on which is mounted a hollow shaft 13 on a shaft base portion 14, the shaft 13 rotatably supporting a mirror body 15 including a mirror element 16 of the mirror assembly 10. Further the mirror assembly 10 contains a frame 17 fixed on the mirror body 15 and comprising a root portion 18 and a wing portion 19. On the root portion 18, an electric drive means (motor) 20 having an output shaft 21, a speed reduction gear mechanism 22 and a final stage gear 23 are arranged.

The frame 17 comprises the root portion 18 provided with a hole 24 to receive the shaft 13 therethrough and the wing portion 19 which substantially vertically stands from one end of the root portion 18. The wing portion 19 is secured on an inner wall of the mirror body 15 by several screws 29, and on its front surface the mirror element 16 is attached via an actuator unit (not shown) for adjusting the reflecting angle of the mirror. For enabling a smooth rotational sliding around the shaft, the under surface of the root portion 18 of the frame is composed to face contact at 25 the upper surface of the shaft base portion 14.

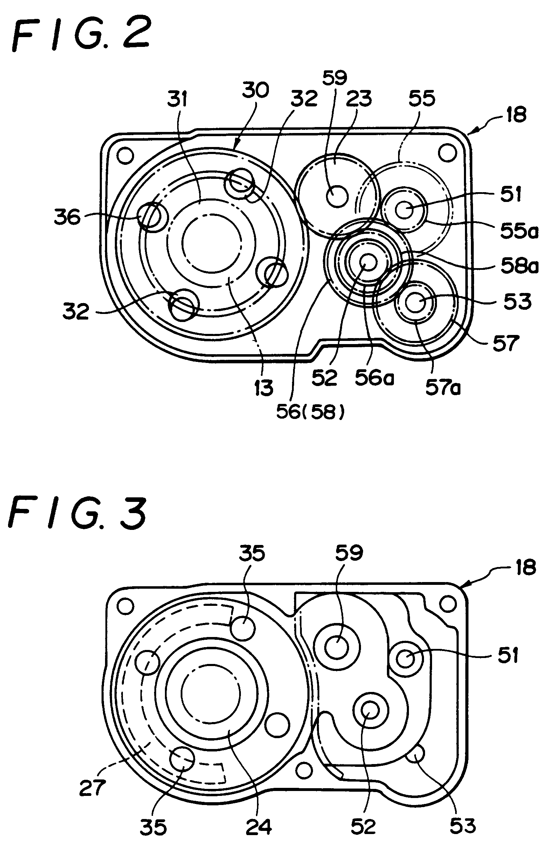

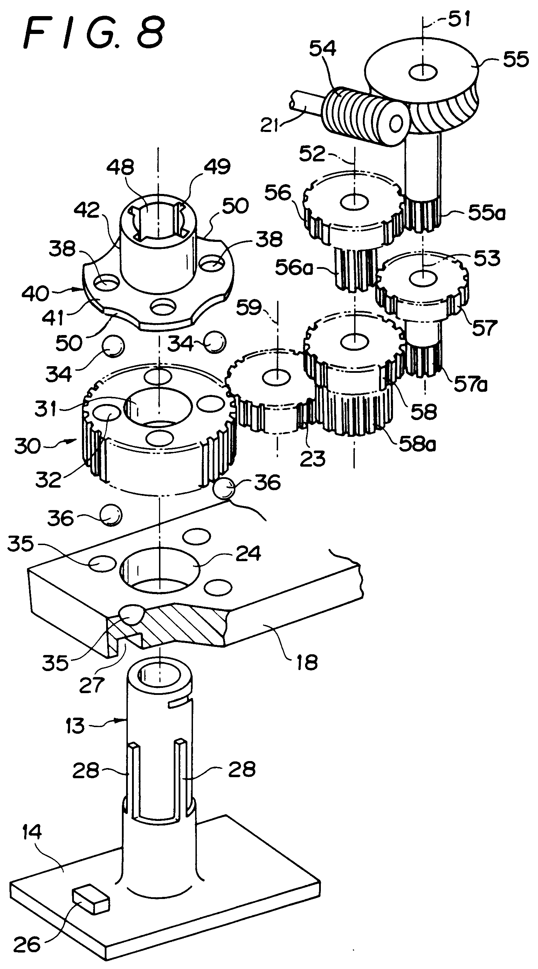

For regulating the boundary position where the mirror body is rotated, a stopper 26 is protrudingly provided on the shaft base portion 14 and a concave portion (guide groove) 27 having an arc shape plane surface is formed on the under surface of the frame root portion 18 to engage with said stopper 26 (Fig. 3 and Fig. 8);
however, such limiting construction is not restricted to the embodiment illustrated in the drawings, it being e.g. also possible to form the concave portion on the shaft base portion 14 and to provide the stopper on the under surface of the frame root portion 18. Further in the depicted embodiment, it is illustrated that the motor is transversely mounted on the frame which is provided in the mirror body, however, its orientation is not limited to said embodiment and it is possible to mount the motor vertically on the frame, in which case the output axis is downwardly protruded to engage a pinion of a speed reduction gear mechanism.

As shown in Fig.s 6 and 8, several protrusions 28 are provided in a generatrix direction on the shaft 13. A clutch gear 30 is provided around the periphery of the shaft 13 so as to be fixed to the shaft when the mirror body is electrically folded and to be free from the shaft in case the mirror body is enforcedly rotated. The clutch gear 30 is provided with a hole 31 in the center thereof for receiving the shaft 13 and is formed with a shock avoidance clutch on the upper surface thereof and a location clutch on the under surface thereof respectively. The shock avoidance clutch comprises a plurality of ball retainer concaves 32 formed on the same circumference on the upper surface of the clutch gear and the location clutch comprises a plurality of teeth 33 formed along the circumference direction of the under surface of the clutch gear. A plurality of steel balls 34 are engaged in said ball retainer concaves 32, and between a plurality of ball retainer concave portions 35 formed on the upper surface of the frame root portion and said teeth 33 are intermediately mounted a plurality of steel balls 36 (Fig.s 5 and 7). The steel balls 34 are further engaged in a plurality of through-holes 38 and rotated to move on the upper surface of the clutch gear running over said ball retainer concave portions 32 when the mirror is enforcedly rotated (Fig.s 6 and 8). The through-holes 38 are arranged along a common circumference in a ball guide 40 slid over the shaft 13 with a space from the upper surface of the clutch gear 30.

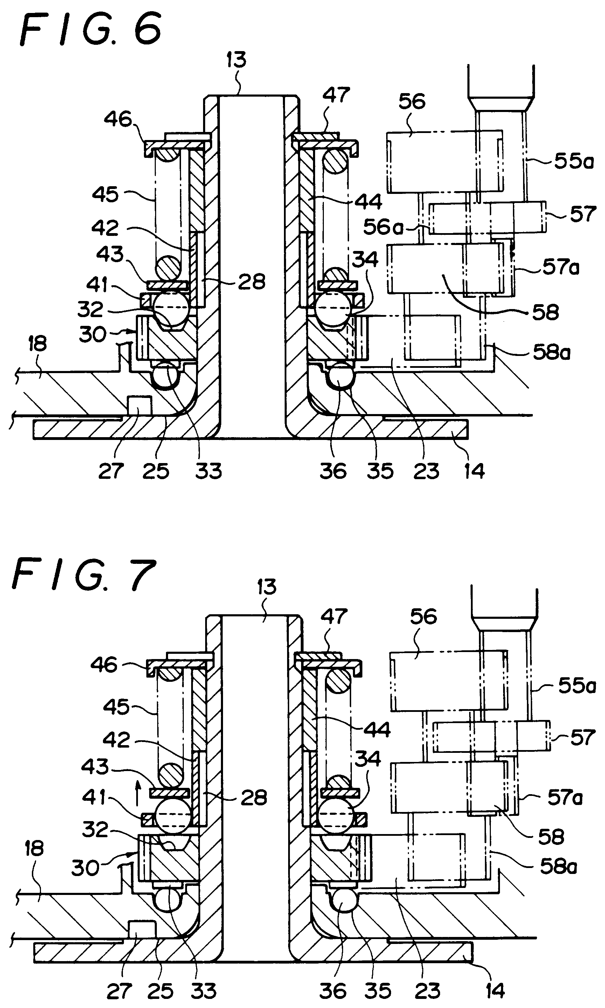

Onto the shaft 13 which penetrates through the hole 24 of the frame root portion, the clutch gear 30, the ball guide 40 comprising a plate portion 41, a washer 43, a sleeve 44, a coil spring 45, a spring retainer 46 and a fastener 47 are slipped on in this order, and the respective steel balls 34, 36 are intermediately mounted between the plate portion 41 of the ball guide 40 and the upper surface of the clutch gear 30 and between the under surface of the clutch gear and the upper surface of the frame root portion 18 (see Fig. 1 and Fig. 6). Fig. 6 is an enlarged longitudinal section view of Fig. 1. Fig. 8 is an exploded view showing the parts assembled around the shaft including a series of the speed reduction gear mechanism, however, respective washer 43, sleeve 44, coil spring 45, spring retainer 46 and fastener 47 are eliminated therefrom.

The protrusions 28 serve to mount the ball guide 40 in a condition of locking the rotation. The shaft penetrates through a hole 48 of the ball guide 40. Grooves 49 are formed through said hole 48 to receive and engage with said protrusions 28. The through-holes 38 (four holes in Fig. 8) are formed on the same circumference of the plate 41 of the ball guide 40 and arc shape cutouts 50 formed in the periphery of the plate portion 41 serve for avoiding the collision with the final stage gear 23.

The composition of teeth series of the speed reduction mechanism 22 connected to the motor 20 will not be limited to the embodiment which is respectively illustrated in Fig.s 2 to 4 and in Fig. 8. In the illustrated embodiment of the speed reduction mechanism 22, there are gears with first to third axis lines 51, 52, 53. A worm 54 is mounted on the output shaft 21 of the motor 20 to be connected with the speed reduction gear mechanism 22 while the final stage gear 23 of the speed reduction gear mechanism 22 is engaged with the clutch gear 30 mounted on the shaft 13. A worm wheel 55 with its twin gear 55a is supported along the first axis line 51 to contact with the worm 54 which is fixed to the output axis 21, and with an intermediary gear 56, respectively, supported along the second axis 52 and being connected with its twin gear 56a which is in contact with an intermediary gear 57 supported along the third axis line 53. Along the second axis line 52, besides the intermediary gear 56 also an intermediary gear 58 is supported to respectively contact with the twin gear 55a which is integrally formed with the worm wheel 55 and with the twin gear 57a which is integrally formed with said intermediary gear 57. Further along a fourth axis line 59, the final stage gear 23 is supported to contact with a twin gear 58a of the intermediary gear 58 and the clutch gear 30.

In Fig.s 1 and 4, a sealing cap 60 covers the whole electric drive means and a printed circuit board 61 for a motor control circuit. The folding drive mechanism is contained in a housing the wall 62 of which is provided on the root portion 18 integrally therewith.

As described hereinbefore, the contact of the frame and the shaft is a surface contact by which the clutch gear 30 composed of the location clutch and the shock avoidance clutch on both surfaces thereof is disposed on the frame root portion. In a system which is composed as described above, the motor 20 is actuated in the mirror body by being electrically rotated and the final stage gear 23 of the speed reduction mechanism 22 which is contacted with the clutch gear 30 revolves around the shaft 13. During said gear 23 revolving, since the steel balls 34 on the upper surface of the clutch gear are engaged in the ball retainer concaves 32 and a condition of the shock avoidance clutch being ON is maintained, the mirror body is electrically rotated toward the erected state or the folded state and is stopped at the erected or folded position by an actuation of the clutch. That is, when the mirror body is electrically rotated, the shock avoidance clutch which comprises the concave portions 32 of the upper surface of the clutch gear 30, the steel balls 34 and the plate 41 of the ball guide 40, is kept in the condition of being ON, thereby the clutch gear 30 takes condition of being fixed to the shaft, and the final stage gear 23, that is the frame 17, rotates around the clutch gear 30.

When the mirror body has been folded, the stopper 26 provided on the shaft contacts the end of the concave portion (guide groove) 27 provided in the frame (shown in Fig. 8), thereby the motor 20 is locked to stop; and when the mirror body has been erected (neutral), the motor is locked to stop after the steel balls 36 contact the teeth 33 of the under surface of the clutch gear 30. In this condition, the output torque of the final stage gear 23 is set to be capable of running over from the precedence thereof, however, incapable of doing from the opposite side.

When the mirror body is enforcedly rotated, the contact of the clutch gear 30 with the final stage gear 23 of the speed reduction gear mechanism 22 is not released and they start to rotate with the mirror body unitedly. The location clutch, comprising the steel balls 36 engaged in the concave portions 35 of the frame root portion and in the teeth 33 of the under surface of the clutch gear 30, cannot be released wherever the frame position is changing. In releasing the lock of the shock avoidance clutch, the steel balls 34 are rotatingly moved on the upper surface of the clutch gear 30, having been lifted out of the ball retainer concave portions 32 in said upper surface, while being held in the through-holes 38 of the plate portion 41 of the ball guide, whereupon said steel balls 34 slide or roll on the clutch gear upper surface, whereby the shock avoidance clutch is released. The mirror body, after having been enforcedly rotated, is then electrically moved again, and since the shock avoidance clutch has been already released and the clutch gear 30 runs idle in respect of the shaft 13 to lead the steel balls 36 to run over the teeth 33 of the gear under-surface from the precedence thereof, simultaneously said steel balls 34 fall down in the ball retainer concave portion 32, and then the mirror body starts to be folded.

In accordance with the present invention, the contact of the frame 17 and the shaft base 14 is constructed to be a surface contact, thereby an electrically foldable outer rearview mirror resisting shattering and improved in the vertical movement of the frame when the mirror body is electrically folded is achieved, and further the location clutch is not released when the mirror body is enforcedly rotated, thereby the teeth of the gear are relieved from the burden thereon. Moreover, the clutch gear which has both clutches is mounted above the upper part of the frame root portion 18, thereby the water proof ability and the dust proof ability of the shock avoidance clutch assembly and the location clutch assembly are improved; and further in the electrical foldable outside mirror in accordance with the present invention, it is possible to reduce the number of assemblies thereof, and a compact electrical foldable unit is achieved.

## Claims

1. An electrically powered foldable outer rearview mirror comprising;
a base (11);
a shaft (13) mounted on the base (11) and having a base portion (14);
a mirror body (15) rotatably mounted around the shaft (13);
a frame (17) provided in the mirror body (15) and having a root portion (18) formed with a hole (24) through which the shaft (13) penetrates;
an electric drive means (20) and a speed reduction gear mechanism (22) respectively fixed on the frame (17) for rotating the mirror body (15);
a clutch gear (30) engaged with an end gear (23) of the speed reduction gear mechanism (22) and connected to the shaft (13);
the under surface of the root portion (18) of the frame (17) being in surface contact (25) with the upper surface of the shaft base portion (14);
the clutch gear (30) being formed with a shock avoidance clutch (32, 34, 40, 45) on the upper surface thereof;
whereby a location clutch (33, 35, 36) for the position where the mirror is erected is formed on the lower surface of the clutch gear (30) and is mounted on the frame root portion (18).

2. The electrically powered foldable outer rearview mirror as defined in claim 1, characterized in that
a stopper (26, 27) is provided between the under surface of the frame root portion (18) and the shaft base portion (14) for determining the forward and the rearward boundary of the position where the mirror body is folded;
said shock avoidance clutch includes a plurality of ball retainer concave recesses (32) which are formed on the same circumference of the clutch gear (30) upper surface, a ball guide (40) mounted on the upper portion of the clutch gear (30) and formed with a plurality of through-holes (38) on the same circumference thereof and a plurality of steel balls (34) engaged in said ball retainer concave recesses (32) and said through-holes and rotated to move on the clutch gear upper surface running out from the ball retainer concave recesses (32) when the mirror body is enforcedly rotated; and
said location clutch includes a plurality of teeth (33) formed along the circumferential direction of the clutch gear (30) under surface, a plurality of ball retainer concave recesses (35) formed on-the frame root (18) upper surface and a plurality of steel balls (36) intermediately provided between said teeth (33) and ball retainer concave recesses (35).

3. The electrically powered foldable outer rearview mirror as defined in claim 1 or 2, characterized that the shaft (13) receives and engages with: the clutch gear (30), a ball guide (40), a washer (43), a sleeve (44), a coil spring (45), a spring retainer (46) and a fastener (47) therethrough in this order, and intermediately being provided with steel balls (34, 36) between a plate portion (41) of the ball guide (40) and the upper surface of the clutch gear (30) and between the under surface of the clutch gear (30) and the upper surface of the frame root portion (18), respectively.

4. The electrically powered foldable outer rearview mirror as defined in claim 3, characterized in that the shaft (13) has several protrusions (28) in a generatrix direction of the shaft to receive and engage with grooves (49) formed in a shaft receiving hole (48) provided in the ball guide (40) which further has a plurality of through-holes (38) formed on the same circumference of the plate portion (41) of said ball guide (40) to loosely hold the steel balls (34) on the upper surface of the clutch gear (30).

5. The electrically powered foldable outer rearview mirror as defined in any of claims 1 to 4, characterized in that a wall (62) surface is provided on the root portion (18), the clutch gear being contained in the wall surface.

## Patentansprüche

1. Elektrisch angetriebener klappbarer Außenrückblickspiegel, mit:
einer Basis (11);
einer Achse (13), die auf der Basis (11) montiert ist und selbst einen Basisteil (14) aufweist;
einem Spiegelkörper (15), der um die Achse (13) drehbar auf dieser montiert ist;
einem im Spiegelkörper (15) vorhandenen Rahmen (17), der einen mit einem Loch (24), durch das die Achse (13) hindurchverläuft, ausgebildeten Fußteil (18) aufweist;
einer elektrischen Antriebseinrichtung (20) und einem Drehzahluntersetzungs-Getriebemechanismus (22), die jeweils am Rahmen (17) zum Verdrehen des Spiegelkörpers (15) befestigt sind;
einem Kupplungszahnrad (30), an dem ein Endzahnrad (23) des Drehzahluntersetzungs-Getriebsmechanismus (22) angreift und das mit der Achse (13) verbunden ist;
wobei die Unterseite des Fußteils (18) des Rahmens (17) in Flächenkontakt (25) mit der Oberseite des Achsenbasisteils (14) steht und das Kupplungszahnrad (30) an seiner Oberseite mit einer stoßvermeidenden Kupplung (32, 34, 40, 45) ausgebildet ist,
und wobei eine Positionierungskupplung (33, 35, 36) für die Stellung, in der der Spiegel ausgestellt ist, an der Unterseite des Kupplungszahnrads (30) ausgebildet und am Fußteil (18) des Rahmens montiert ist.

2. Elektrisch angetriebener klappbarer Außenrückblickspiegel nach Anspruch 1, dadurch gekennzeichnet,
daß zwischen der Unterseite des Rahmenfußteils (18) und dem Achsenbasisteil (14) zum Bestimmen der vorderen und der hinteren Grenze der Position, in die der Spiegelkörper geklappt wird, ein Anschlag (26, 27) vorhanden ist;
daß die stoßvermeidene Kupplung umfaßt: eine Mehrzahl von kugelaufnehmenden konkaven Mulden (32), die auf einem gemeinsamen Umlaufkreis der Oberseite des Kupplungszahnrads (30) gebildet sind; eine Kugelführung (40), die auf dem oberen Teil des Kupplungszahnrads (30) montiert ist und mit einer Mehrzahl von durchgehenden Löchern (38) auf dem gleichen Umlaufkreis des Kupplungszahnrads gebildet ist; und eine Mehrzahl von Stahlkugeln (34), die in die kugelaufnehmenden konkaven Mulden (32) und in die durchgehenden Löcher eingreifen und zu einer Bewegung auf der Oberseite des Kupplungszahnrads, aus den kugelaufnehmenden konkaven Mulden (32) herauslaufend, verdreht werden, wenn der Spiegelkörper erzwungenermaßen verdreht wird;
und daß die Positionierungskupplung umfaßt: eine Mehrzahl von Zähnen (33), die entlang der Umlaufrichtung der Unterseite des Kupplungszahnrads (30) gebildet sind; eine Mehrzahl von kugelaufnehmenden konkaven Mulden (35), die in der Oberseite des Rahmenfußteils (18) gebildet sind; und eine Mehrzahl von Stahlkugeln (36), die als Zwischenglieder zwischen diesen Zähnen (33) und den kugelaufnehmenden konkaven Mulden (35) angeordnet sind.

3. Elektrisch angetriebener klappbarer Außenrückblickspiegel nach Anspruch 1 oder 2, dadurch gekennzeichnet, daß die folgenden Teile an der Achse (13) montiert sind, die an ihnen aufgreift:
das Kupplungszahnrad (30), eine Kugelführung (40), eine Scheibe (43), eine Hülse (44), eine Schraubenfeder (45), einen Feder-Stützhalter (46) und ein Befestigungsglied (47), durch die die Achse hindurchverläuft und die in dieser Reihenfolge angeordnet sind und als Zwischenglieder Stahlkugeln (34, 36) zwischen einem Plattenteil (41) der Kugelführung (40) und der Oberseite des Kupplungszahnrads (30) bzw. zwischen der Unterseite des Kupplungszahnrads (30) und der Oberseite des Rahmenfußteils (18) umfassen.

4. Elektrisch angetriebener klappbarer Außenrückblickspiegel nach Anspruch 3, dadurch gekennzeichnet, daß die Achse (13) mehrere in Richtung ihrer Erzeugenden verlaufende Vorsprünge (28) hat, die in Nuten (49) aufgenommen werden und an diesen angreifen, welche in einem die Achse aufnehmenden Loch (48) in der Kugelführung (40) gebildet sind, die ihrerseits zum lockeren Halten der Stahlkugeln (34) an der Oberseite des Kupplungszahnrads (30) eine Mehrzahl von durchgehenden Löchern (38) aufweist, die auf einem gemeinsamen Umlaufkreis des Plattenteils (41) der Kugelführung (40) gebildet sind.

5. Elektrisch angetriebener klappbarer Außenrückblickspiegel nach einem der Ansprüche 1 bis 4, dadurch gekennzeichnet, daß auf dem Fußteil (18) eine Wand (62) sitzt, in der das Kupplungszahnrad enthalten ist.

## Revendications

1. Rétroviseur extérieur repliable à commande électrique, comprenant :
une base (11);
un axe (13) monté sur la base (11) et possédant une partie de base (14);
un corps (15) du miroir, monté de manière à pouvoir tourner autour de l'axe (13);
un cadre (17) prévu dans le corps (15) du miroir et possèdant une partie de base (18) pourvue d'un trou (24), dans lequel pénètre l'axe (13);
des moyens d'entraînement électrique (20) et un mécanisme réducteur de vitesse (22) fixé respectivement sur le cadre (17) pour faire tourner le corps (15) du miroir;
un pignon d'embrayage (30) engrenant avec un pignon d'extrémité (23) du mécanisme réducteur de vitesse (22) et raccordé à l'axe (13);
la face inférieure de la partie de base (18) du cadre (17) étant en contact par une surface (25) avec la surface supérieure de la partie de base (14) de l'axe;
le pignon d'embrayage (30) étant équipé, sur sa surface supérieure, d'un embrayage (32,34,40,45) évitant les chocs;
un embrayage de positionnement (33,35,36) pour la position dans laquelle le miroir est redressé, étant formé sur la surface inférieure du pignon d'embrayage (30) et étant monté sur la partie de base (18) du cadre.

2. Rétroviseur extérieur repliable à commande électrique tel que défini dans la revendication 1, caractérisé en ce que
un dispositif de butée (26,27) est prévu entre la surface inférieure de la partie de base (18) du cadre et la partie de base (14) de l'axe pour déterminer la limite avant et la limite arrière de la position, dans laquelle le corps du miroir est replié;
ledit embrayage évitant les chocs comprend une pluralité de renfoncements concaves (32) de retenue de billes, qui sont formées sur la même circonférence de la surface supérieure du pignon d'embrayage (30), un guide de billes (40) monté sur la partie supérieure du pignon d'embrayage (30) et comportant une pluralité de trous traversants (38) situés sur la même circonférence de ce pignon d'embrayage et une pluralité de billes d'acier (34) engagées dans lesdits renfoncements concaves (32) de retenue de billes et dans lesdits trous traversants et tournant de manière à se déplacer sur la surface supérieure du pignon d'embrayage en sortant des renfoncements concaves (32) de retenue des billes lorsqu'on fait pivoter à force le corps du miroir; et
ledit embrayage de positionnement comprend une pluralité de dents (33) formées le long de la direction circonférentielle du pignon d'embrayage (30) sur la surface inférieure, une pluralité de renfoncements concaves (35) de retenue de billes formés sur la surface supérieure de la base (18) du cadre et une pluralité de billes d'acier (36) disposées en position intermédiaire entre lesdites dents (33) et lesdits renfoncements concaves (35) de retenue de billes.

3. Rétroviseur extérieur repliable à commande électrique tel que défini dans la revendication 1 ou 2, caractérisé en ce que l'axe (13) reçoit et engrène avec : le pignon d'embrayage (30), un guide de billes (40), une rondelle (43), un manchon (44), un ressort hélicoïdal (45), un organe (46) de retenue du ressort et un dispositif de fixation (47), en les traversant dans cet ordre, et est équipé de billes d'acier (34,36) intercalées entre une partie formant plaque (41) du guide de billes (40) et la surface supérieure du pignon d'embrayage (30) et respectivement entre la surface inférieure du pignon d'embrayage (30) et la surface supérieure de la partie de base (18) du cadre.

4. Rétroviseur extérieur repliable à commande électrique tel que défini dans la revendication 3, caractérisé en ce que l'axe (13) comporte plusieurs parties saillantes (28) dans la direction d'une génératrice de l'axe de manière à recevoir et engrener avec des rainures (49) formées dans un trou (48) de réception de l'axe et prévues dans le guide de billes (40), qui possède en outre une pluralité de trous traversants (38) formés sur la même circonférence de la partie formant plaque (41) dudit guide de billes (40) pour retenir de façon lâche les billes d'acier (34) sur la surface supérieure du pignon d'embrayage (30).

5. Rétroviseur extérieur repliable à commande électrique tel que défini selon l'une des revendications 1 à 4, caractérisé en ce qu'une surface de paroi (62) est prévue sur la partie de base (18), le pignon d'embrayage étant logé dans la surface de la paroi.
